# EUROPÄISCHE PATENTSCHRIFT

(11) **EP 0 506 167 B1**
(45) Veröffentlichungstag und Bekanntmachung des Hinweises auf die Patenterteilung: **05.06.1996**
(21) Anmeldenummer: 92200673.9
(22) Anmeldetag: 10.03.1992
(51) Int. Cl.: G11B 5/41, G11B 15/665

(54) **Gerät zum Aufzeichnen und Wiedergeben von Signalen mit mindestens einem rotierenden Magnetkopf**
Apparatus for recording and reproducing of signals with at least one rotating magnetic head
Appareil pour enregistrer et reproduire des signaux avec au moins une tête magnétique rotative

(30) Priorität: 18.03.1991 AT 604/91
(43) Veröffentlichungstag der Anmeldung: 30.09.1992
(73) Patentinhaber: Philips Electronics N.V., 5621 BA Eindhoven (NL)
(72) Erfinder: Dienbauer, Josef, NL-5656 AA Eindhoven (NL)
(74) Vertreter: Cuppens, Hubertus Martinus Maria

(56) Entgegenhaltungen:
- EP-A- 0 423 770
- BE-A- 891 096
- PATENT ABSTRACTS OF JAPAN vol. 14, no. 59 (P-1000)(4002) 2. Februar 1990 & JP-A-12 82 716

## Beschreibung

Die Erfindung betrifft ein Gerät zum Aufzeichnen und Wiedergeben von Signalen auf einem in einer Kassette untergebrachten Magnetband mit einer Abtasteinrichtung, die mindestens einen rotierend antreibbaren, auf einer kreisförmigen Bewegungsbahn umlaufenden Magnetkopf zum Abtasten des Magnetbandes zum Aufzeichnen und Wiedergeben der Signale aufweist, und mit einer zum Zusammenwirken mit dem Magnetband vorgesehenen, zwischen einer Ladeposition und einer Betriebsposition verstellbaren Kassettenaufnahmeeinrichtung, in die in ihrer Ladeposition das in der Kassette untergebrachte Magnetband in eine Ausgangsposition einbringbar ist und mit der durch ihre Verstellung in ihre Betriebsposition das Magnetband in eine Zwischenposition bringbar ist, und mit einer zum Zusammenwirken mit dem Magnetband vorgesehenen, zwischen einer Ausfädelposition und einer Einfädelposition verstellbaren Bandfädeleinrichtung, mit der in ihrer Ausfädelposition das in seine Zwischenposition gebrachte Magnetband hintergreifbar ist und mit der durch ihre Verstellung in ihre Einfädelposition das hintergriffene Magnetband in einen Abtastverlauf bringbar ist, in dem das Magnetband die Abtasteinrichtung zumindest teilweise umschlingt und von dem Magnetkopf abtastbar ist, und mit einer zwischen einer Ruheposition und einer Reinigungsposition verstellbaren Kopfreinigungseinrichtung, die mit einer Federeinrichtung zu ihrer Ruheposition hin belastet ist und die einen Betätigungsteil aufweist, über den in Folge der Verstellung einer vorgenannten Einrichtung zum Zusammenwirken mit dem Magnetband die Kopfreinigungseinrichtung entgegen der Kraft der Federeinrichtung aus ihrer Ruheposition in ihre Reinigungsposition steuerbar ist, in der sie zur Bewegungsbahn des Magnetkopfes hin verstellt ist und den an ihr vorbeibewegten Magnetkopf reinigt.

Solche Geräte sind in unterschiedlichen Ausführungsvarianten im Handel erhältlich. Beispielsweise ist so ein Gerät gemäß dem eingangs angeführten Absatz aus der am 14. November 1989 veröffentlichten japanischen Patentanmeldung JP-A-1-282716 bekannt. Bei diesem bekannten Gerät ist die Ausbildung so getroffen, daß der Betätigungsteil der Kopfreinigungseinrichtung in den Verstellweg eines Teiles der zum Zusammenwirken mit dem Magnetband vorgesehenen Bandfädeleinrichtung ragt und folglich von diesem Teil der Bandfädeleinrichtung gesteuert wird. Bei einer solchen Bandfädeleinrichtung handelt es sich um eine in mechanischer Hinsicht relativ empfindliche Baugruppe eines solchen Gerätes, die nur möglichst geringen mechanischen Belastungen ausgesetzt werden soll. Außerdem besteht bei dem bekannten Gerät die Gefahr, daß für den Fall eines Gebrechens der Kopfreinigungseinrichtung von dieser rückwirkend eine Störung des Fädelbetriebes der Bandfädeleinrichtung auftreten kann, was unerwünschte Bandbeschädigungen zur Folge haben kann.

Die Erfindung hat sich zur Aufgabe gestellt, die vorstehend angeführten Schwierigkeiten bei einem Gerät gemäß dem eingangs angeführten Absatz zu vermeiden und ein Gerät zu schaffen, bei dem durch die Verstellung bzw. Steuerung der Kopfreinigungseinrichtung keine hohen Belastungen für die Bandfädeleinrichtung auftreten und keine auf Gebrechen der Kopf reinigungseinrichtung zurückzuführende Bandbeschädigungen möglich sind. Zur Lösung dieser Aufgabe ist erfindungsgemäß vorgesehen, daß der Betätigungsteil der Kopfreinigungseinrichtung in den Verstellweg der aus Kassettenaufnahmeeinrichtung und gegebenenfalls darin eingesetzter Kassette gebildeten Einheit ragend angeordnet und ausgebildet ist, wobei der Betätigungsteil bei einer Verstellung der Kassettenaufnahmeeinrichtung zwischen ihrer Ladeposition und ihrer Betriebsposition die Kopf reinigungseinrichtung aus ihrer Ruheposition in ihre Reinigungsposition steuert. Auf diese Weise ist erreicht, daß die Kopfreinigungseinrichtung in Abhängigkeit von der Verstellung der zum Zusammenwirken mit dem Magnetband vorgesehenen Kassettenaufnahmeeinrichtung gesteuert wird. Eine solche Kassettenaufnahmeeinrichtung stellt aber eine robuste und mechanisch unempfindliche und stabile Baugruppe eines solchen Gerätes dar, durch deren Verstellung ein besonders sicheres Verstellen der Kopfreinigungseinrichtung gewährleistet ist. Durch die Ausnützung der Verstellbewegung der robusten Kassettenaufnahmeeinrichtung zur Steuerung der Kopfreinigungseinrichtung ist auch erreicht, daß andere Baugruppen des Gerätes, die mechanisch empfindlich sind, vor größeren mechanischen Belastungen verschont bleiben. Ein weiterer Vorteil besteht darin, daß aufgrund der Tatsache, daß die Kassettenaufnahmeeinrichtung nicht unmittelbar, sondern indirekt über die das Magnetband schützend enthaltende Kassette mit dem Magnetband zusammenwirkt, ein bei der Verstellung der Kassettenaufnahmeeinrichtung samt der darin eingebrachten Kassette eventuell auftretendes Gebrechen der Kopfreinigungseinrichtung zwar eine Behinderung für diese Verstellung oder Beschädigungen der Kassettenaufnahmeeinrichtung bzw. der Kassette bewirken können, daß aber ein solches Gebrechen der Kopfreinigungseinrichtung keine Beschädigungen des in der Kassette geschützt untergebrachten Magnetbandes zur Folge haben kann.

Der Betätigungsteil der Kopfreinigungseinrichtung kann beispielsweise von einer in die Kassettenaufnahmeeinrichtung eingesetzten Kassette betätigt werden. Als besonders vorteilhaft hat sich erwiesen, wenn der Betätigungsteil der Kopfreinigungseinrichtung in den Verstellweg der Kassettenaufnahmeeinrichtung ragend angeordnet und ausgebildet ist. Hiedurch ist erreicht, daß eine Verstellung der Kopfreinigungseinrichtung in ihre Reinigungsposition ausschließlich von der Kassettenaufnahmeeinrichtung bewirkt wird, wodurch bei einem Gebrechen der Kopfreinigungseinrichtung auch Beschädigungen einer Kassette ausgeschlossen sind, und daß eine Verstellung der Kopfreinigungseinrichtung in ihre Reinigungsposition auch dann erfolgt, wenn die Kassettenaufnahmeeinrichtung ohne eine in dieselbe eingebrachte Kassette zwischen ihrer Ladeposition und ihrer Betriebsposition verstellt wird.

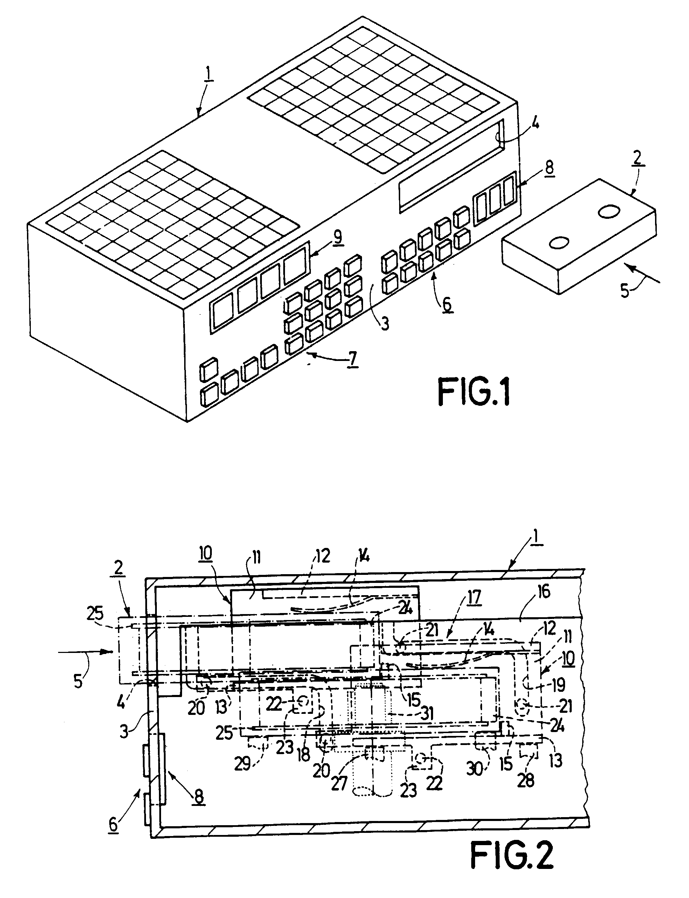

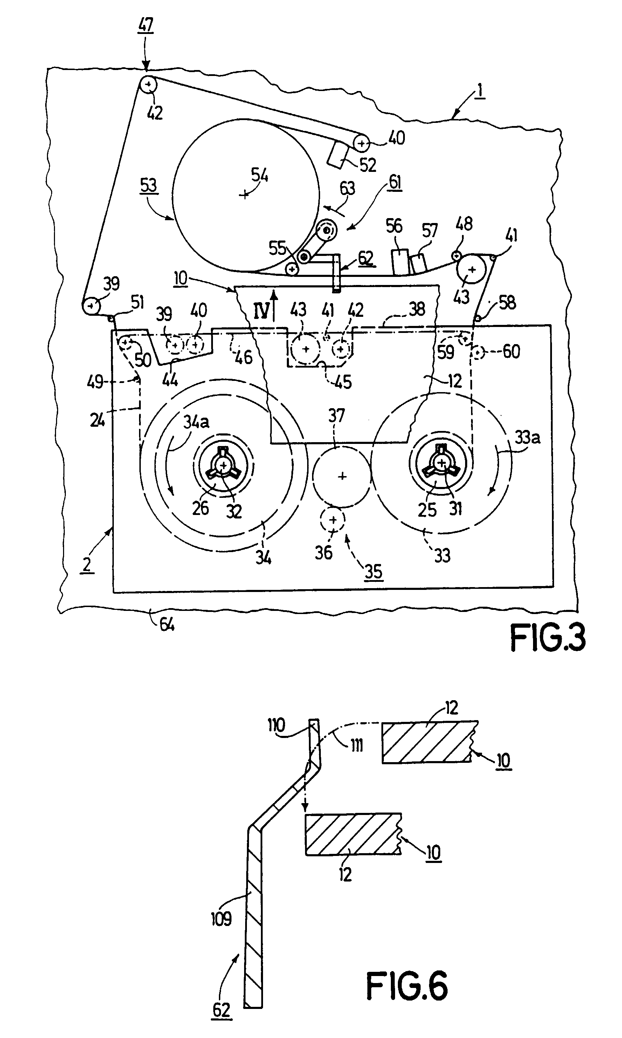

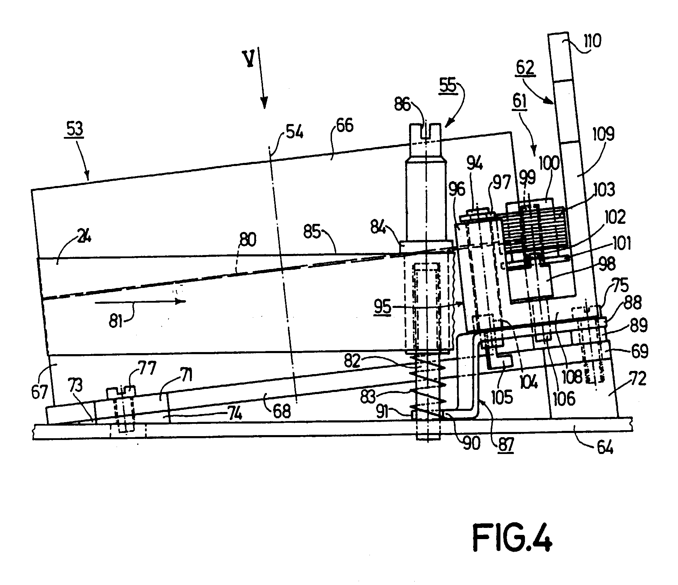

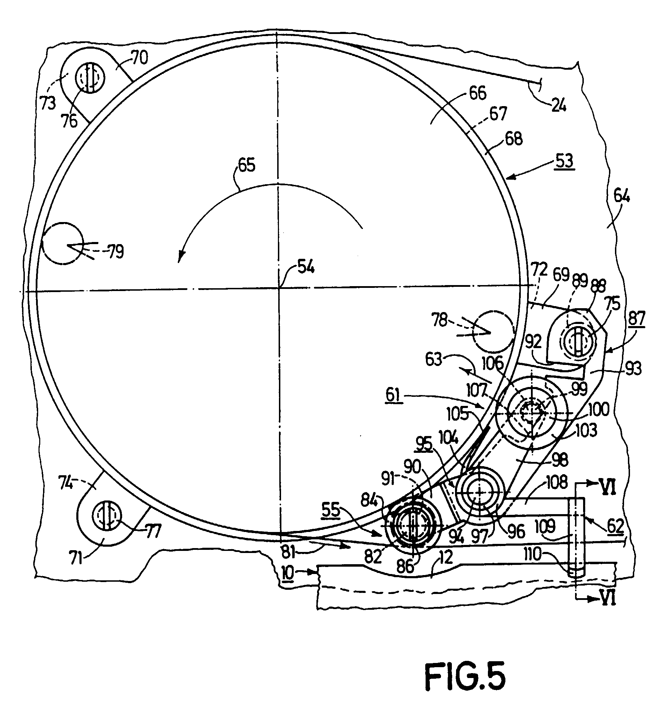

Die Erfindung wird im folgenden anhand eines in den Zeichnungen dargestellten Ausführungsbeispieles näher beschrieben, auf das die Erfindung jedoch nicht beschränkt sein soll. Die Fig.1 zeigt in einem verkleinerten Maßstab schematisch in einer Schrägansicht ein Gerät zum Aufzeichnen und Wiedergeben von Fernsehsignalen und Tonsignalen, in das eine Kassette mit einem darin untergebrachten Magnetband einbringbar ist und das eine trommelförmige Abtasteinrichtung mit zwei rotierend antreibbaren Magnetköpfen zum Abtasten des Magnetbandes und eine verstellbare Kopfreinigungseinrichtung zum Reinigen dieser beiden Magnetköpfe aufweist. Die Fig.2 zeigt in einem gegenüber Fig.1 größeren Maßstab bei weggeschnittener Gerätegehäuseseitenwand schematisch eine Seitenansicht eines Teiles des Gerätes gemäß Fig.1, wobei eine zwischen einer Ladeposition und einer Betriebsposition verstellbare Kassettenaufnahmeeinrichtung dieses Gerätes sowohl in ihrer Ladeposition befindlich als auch in ihrer Betriebsposition befindlich dargestellt ist. Die Fig.3 zeigt im gleichen Maßstab wie die Fig.2 schematisch einen Teil des Gerätes gemäß den Figuren 1 und 2, wobei mittels der in ihre Betriebsposition verstellten Kassettenaufnahmeeinrichtung eine darin eingesetzte Kassette in eine Betriebslage im Gerät gebracht ist und wobei mittels einer verstellbaren Bandfädeleinrichtung das ursprünglich in der Kassette untergebrachte Magnetband aus dieser herausgezogen und in einen Abtastverlauf gebracht ist, in dem das Magnetband die trommelförmige Abtasteinrichtung teilweise umschlingt. Die Fig.4 zeigt in einem gegenüber der Fig.3 größeren Maßstab und in einer gegenüber der natürlichen Größe zweifachen Vergrößerung in einer Seitenansicht entsprechend dem Pfeil IV in Fig.3 die trommelförmige Abtasteinrichtung und die Kopfreinigungseinrichtung des Gerätes gemäß den Figuren 1 bis 3. Die Fig.5 zeigt in einer Draufsicht entsprechend dem Pfeil V in Fig.4 die Abtasteinrichtung und die Kopfreinigungseinrichtung des Gerätes gemäß den Figuren 1 bis 4. Die Fig.6 zeigt in einem Schnitt längs der Linie VI - VI in Fig.5 ein Detail des Gerätes gemäß den Figuren 1 bis 5, aus dem das Zusammenwirken eines Teiles der Kassettenaufnahmeeinrichtung mit einem Betätigungsteil der Kopfreinigungseinrichtung ersichtlich ist.

Die Fig.1 zeigt ein Gerät 1 zum Aufzeichnen und Wiedergeben von Fernsehsignalen und Tonsignalen auf einem Magnetband. Das Magnetband ist in einer in Fig.1 schematisch dargestellten quaderförmigen Kassette 2 untergebracht, die zwei nebeneinanderliegende Wickelkerne enthält, zwischen denen das Magnetband verläuft. Die Kassette 2 ist durch eine in der Frontwand 3 des Gehäuses des Gerätes 1 vorgesehene Öffnung 4 in einer durch einen Pfeil 5 angedeuteten Einschubrichtung in das Gerät 1 händisch einführbar. Beim Einführen der Kassette 2 in das Gerät 1 wird dieselbe in eine verstellbare Kassettenaufnahmeeinrichtung eingeschoben, deren Aufbau nachfolgend noch beschrieben ist. Mit der Kassettenaufnahmeeinrichtung wird die Kassette nach dem vollständigen Einführen derselben in das Gerät 1 zuerst parallel und danach senkrecht zu den Kassettenhauptwänden in eine in Fig.2 schematisch angedeutete Betriebslage im Gerät abgesenkt. Zum Einschalten von Betriebsarten des Gerätes, wie "Aufnahme", "Wiedergabe im Normalen Vorlauf", "Wiedergabe im Normalen Rücklauf", "Wiedergabe bei Bandstillstand", "Schneller Vorlauf", "Schneller Rücklauf" und dergleichen, und zum Einschalten von Betriebsfunktionen, wie "Verstellen der Kassettenaufnahmeeinrichtung", "Verstellen der Bandfädeleinrichtung" und dergleichen, weist das Gerät 1 an der Frontwand 3 einen ersten Satz 6 von Bedienungstasten auf. Zum Vorprogrammieren des Gerätes 1, zum Einschalten eines Sendersuchlaufes im Gerät 1 und zum Eingeben von weiteren Daten, beispielsweise zum Einstellen einer Tageszeituhr, weist das Gerät 1 an der Frontwand 3 einen zweiten Satz 7 von Bedienungstasten auf. Ferner weist das Gerät 1 an der Frontwand 3 zwei Anzeigeeinrichtungen 8 und 9 auf, deren Anzeigestellen beispielsweise je aus sieben Segmenten aufgebaut sind und die beispielsweise zum Anzeigen von Zählwerksständen eines Zählwerkes zum Messen des Bandverbrauches und zum Anzeigen von Uhrzeiten dienen.

Wie bereits erwähnt wurde und in Fig.2 dargestellt ist, weist das Gerät 1 zum Überführen einer durch die Öffnung 4 in der Frontwand 3 in das Gerät 1 händisch eingeführten Kassette 2 in ihre Betriebslage eine verstellbare Kassettenaufnahmeeinrichtung 10 auf. Bezüglich einer solchen Kassettenaufnahmeeinrichtung kann auf die AT-PS 382 979 verwiesen werden, in der eine solche Kassettenaufnahmeeinrichtung bereits im Detail dargestellt und beschrieben ist, weshalb hier nur eine kurzgefaßte Beschreibung dieser Kassettenaufnahmeeinrichtung 10 erfolgt.

Die Kassettenaufnahmeeinrichtung 10 ist im wesentlichen schachtförmig ausgebildet und weist zwei Seitenwände 11 auf. Weiters weist die Kassettenaufnahmeeinrichtung 10 eine die beiden Seitenwände 11 miteinander verbindende, durchgehende Deckenwand 12 und zwei von den Seitenwänden 11 abgewinkelte, zueinander hin gerichtete Bodenwandabschnitte 13 auf. Mit der Deckenwand 12 sind an ihrer den Bodenwandabschnitten 13 zugewandten Seite zwei metallene Blattfedern 14 durch Kleben oder Ultraschallschweißen verbunden. Die Blattfedern 14 drücken eine in die Kassettenaufnahmeeinrichtung 10 eingeführte Kassette 2 mit ihrer Bodenwand gegen die Bodenwandabschnitte 13 der Kassettenaufnahmeeinrichtung 10. Von den Bodenwandabschnitten 13 stehen zwei Anschläge 15 ab, die zur Begrenzung der Einschiebebewegung einer Kassette 2 in die Kassettenaufnahmeeinrichtung 10 vorgesehen sind.

Wie aus Fig.2 ersichtlich ist, ist die Kassettenaufnahmeeinrichtung 10 zwischen einer Ladeposition und einer Betriebsposition verstellbar, wobei die Verstellbewegung von der Ladeposition in die Betriebsposition entlang einer zuerst parallel und danach senkrecht zu ihrer Deckenwand 12 verlaufenden L-förmigen Bewegungsbahn erfolgt. Zum Führen der Kassettenaufnahmeeinrichtung 10 entlang dieser L-förmigen Bewegungsbahn ist zwischen der Kassettenaufnahmeeinrichtung 10 und zwei im Gerät 1 feststehenden, parallel zu den Seitenwänden 11 der Kassettenaufnahmeeinrichtung 10 verlaufenden Führungsplatten 16 eine Führungseinrichtung 17 vorgesehen. Die Führungseinrichtung 17 weist in jeder Führungsplatte 16 zwei die L-förmige Bewegungsbahn festlegende L-förmige Führungsnuten 18 und 19 auf. Ferner weist die Führungseinrichtung 17 an jeder Seitenwand 11 der Kassettenaufnahmeeinrichtung 10 zwei in die Seitenwand 11 eingesetzte Führungsstifte 20 und 21 auf, die mit ihren freien Enden in die Führungsnuten 18 und 19 hineinragen. Um die Kassettenaufnahmeeinrichtung 10 bei ihrer Montage im Gerät mit ihren Führungsstiften 20 und 21 einfach in die Führungsnuten 18 und 19 einsetzen zu können, weisen diese Führungsnuten an ihren der Frontwand 3 zugewandten Enden je einen nach oben abgewinkelten Nutabschnitt auf. Diese Nutabschnitte erstrecken sich bis zum oberen Ende der Führungsplatten 16 und in die offenen Enden dieser Nutabschnitte sind bei der Montage der Kassettenaufnahmeeinrichtung 10 die Führungsstifte 20 und 21 einfach von oben her einführbar. Die Steuerung bzw. der Antrieb zur Verstellung der Kassettenaufnahmeeinrichtung 10 erfolgt über einen Kopplungsstift 22, der seitlich von einem Lappen 23 absteht, der mit einem Bodenwandabschnitt 13 verbunden ist.

Bei in ihrer Ladeposition befindlicher Kassettenaufnahmeeinrichtung 10 ist eine Kassette 2 von Hand aus in die Kassettenaufnahmeeinrichtung 10 einführbar und zwar soweit, bis die Kassette 2 gegen die beiden Begrenzungsanschläge 15 stößt. In diesem Fall nimmt dann das in der Kassette 2 untergebrachte Magnetband 24, das zwischen zwei mit Flanschen versehenen Wickelkernen, also zwischen zwei Spulen 25 und 26 verläuft, eine Ausgangsposition ein. Durch ein nachfolgendes Verstellen der Kassettenaufnahmeeinrichtung 10 in ihre Betriebsposition wird die Kassette 2 in ihre Betriebslage verstellt. In ihrer Betriebsposition ist die Kassettenaufnahmeeinrichtung 10 von schematisch angedeuteten gerätestationären Positionieranschlägen 27 und 28 unterstützt. Hiebei ist dann die Kassette 2 in ihrer Betriebslage ebenfalls von schematisch angedeuteten gerätestationären Positionieranschlägen 29 und 30 unterstützt. Auf diese Weise sind die Betriebsposition der Kassettenaufnahmeeinrichtung 10 und die Betriebslage der Kassette 2 festgelegt.

Wie aus Fig.3 ersichtlich ist, stehen in der Betriebslage der Kassette 2 mit den beiden Spulen 25 und 26 zwei Wickeldorne 31 und 32 in Antriebsverbindung, von denen in Fig.2 der Wickeldorn 31 mit punktierten Linien angedeutet ist. Die beiden Wickeldorne 31 und 32 sind je mit einem Antriebsrad 33 und 34 antriebsmäßig verbunden. Zum Antreiben dieser beiden Antriebsräder 33 und 34 weist das Gerät 1 eine in Fig.3 schematisch angedeutete Antriebseinrichtung 35 auf, die ein von einem Motor in entgegengesetzten Drehrichtungen motorisch antreibbares, ortsfestes Treibrad 36 aufweist, von dem ein verschwenkbares Treibrad 37 antreibbar ist, das korrespondierend zu seiner Drehrichtung wahlweise mit einem von den beiden mit den Wickeldornen 31 und 32 antriebsmäßig verbundenen Antriebsrädern 33 und 34 in Antriebsverbindung bringbar ist, um das Antriebsrad 33 in der mit einem Pfeil 33a angegebenen Drehrichtung und das Antriebsrad 34 in der mit einem Pfeil 34a angegebenen Drehrichtung anzutreiben.

Durch das Verstellen der Kassettenaufnahmeeinrichtung 10 in ihre Betriebsposition wird das in einer in der Kassettenaufnahmeeinrichtung 10 befindlichen Kassette untergebrachte Magnetband 24 in eine Zwischenposition gebracht, die in den Figuren 2 und 3 mit einer strichpunktierten Linie angedeutet ist. Beim Absenken der Kassette 2 in ihre Betriebslage wird ein an der Stirnseite 38 derselben vorgesehener, nicht dargestellte Kassettenverschlußdeckel geöffnet, wodurch eine Kassettenöffnung in der Stirnseite 38 freigegeben wird. Weiters treten beim Absenken der Kassette 2 in ihre Betriebslage vier Bandführungen 39, 40, 41 und 42 und eine Andruckrolle 43, die sich hiebei je in einer mit strichpunktierten Linien dargestellten Ausfädelposition befinden, in zwei Ausnehmungen 44 und 45 der Kassette 2 ein, wobei sie den mit einer strichpunktierten Linie dargestellten Abschnitt 46 des Magnetbandes 24 hintergreifen. Die Bandführungen 39, 40 und 42 sind Bestandteile einer Bandfädeleinrichtung 47, die in Fig.3 nur schematisch dargestellt ist. Bezüglich einer solchen Bandfädeleinrichtung kann auf die AT-PS 384 686 verwiesen werden, in der eine solche Bandfädeleinrichtung bereits im Detail dargestellt und beschrieben ist, weshalb hier nur eine kurzgefaßte Beschreibung dieser Bandfädeleinrichtung 47 erfolgt.

Die Bandfädeleinrichtung 47 ist zwischen einer Ausfädelposition, in der ihre in Fig.3 dargestellten Bestandteile mit strichpunktierten Linien angedeutet sind, und einer Einfädelposition, in der ihre in Fig.3 dargestellten Bestandteile mit vollen Linien dargestellt sind, verstellbar. In der Ausfädelposition der Bandfädeleinrichtung 47 hintergreifen die Bandführungen 39, 40 und 42 derselben das in seiner Zwischenposition befindliche Magnetband 24. Durch Verstellen der Bandfädeleinrichtung 47 in ihre Einfädelposition wird das Magnetband 24 in einen Abtastverlauf gebracht, auf den nachfolgend noch näher eingegangen ist.

Im Laufe der Verstellung der Bandfädeleinrichtung 47 in ihre Einfädelposition werden auch die Bandführung 41 in ihre Betriebslage und die Andruckrolle 43 in eine in Fig.3 nicht dargestellte Zwischenlage in unmittelbarer Nähe einer Bandantriebswelle 48 verstellt. Aus ihrer Zwischenlage wird die Andruckrolle 43 in ihre in Fig.3 dargestellte Betriebslage verstellt, in der sie das Magnetband 24 an die Bandantriebswelle 48 andrückt. Da die Einrichtungen zum öffnen des Kassettenverschlußdeckels, zum Verstellen der Bandführungen der Bandfädeleinrichtung und der Andruckrolle und zum Andrücken der Andruckrolle an die Bandantriebswelle für die vorliegende Erfindung nicht wesentlich sind, sind diese auch der Einfachheit halber nicht dargestellt. Derartige Einrichtungen sind an sich aus bestehenden Geräten dieser Art allgemein bekannt, wobei bezüglich der Bandfädeleinrichtung nochmals auf die AT-PS 384 686 hingewiesen sei.

Nach einer Verstellung der Bandführungen 39, 40 und 42 in ihre Einfädelposition und der Bandführung 41 sowie der Andruckrolle 43 in ihre Betriebslagen nimmt das Magnetband 24 den in Fig.3 mit einer vollen Linie dargestellten Abtastverlauf ein. Dabei erstreckt sich das Magnetband 24 von der Spule 26 über zwei in der Kassette enthaltene Bandführungen 49 und 50, einen Bandspannungsfühler 51, die verstellbaren Bandführungen 39, 42 und 40, einen ortsfesten Magnetkopf 52 zum Löschen aller auf dem Magnetband 24 aufgezeichneten Signale, eine trommelförmige Abtasteinheit 53, die zwei in Fig.3 nicht dargestellte um die Achse 54 der Abtasteinrichtung 53 rotierend antreibbare, auf einer kreisförmigen Bewegungsbahn umlaufende Magnetköpfe zum Aufzeichnen und Wiedergeben von Fernsehsignalen in und aus schräg zur Längsrichtung des Magnetbandes 24 verlaufenden, nebeneinanderliegenden Spuren enthält, eine ortsfeste Bandführung 55, einen ortsfesten Magnetkopf 56 zum Löschen von Tonsignalen in einer in Längsrichtung des Magnetbandes 24 verlaufenden Tonspur, einen weiteren ortsfesten Magnetkopf 57 zum Aufzeichnen und Wiedergeben von Tonsignalen in der Tonspur und zum Aufzeichnen und Wiedergeben von Synchronisationssignalen in einer in Längsrichtung des Magnetbandes 24 und parallel neben der Tonspur verlaufenden Synchronspur, die Bandantriebswelle 48, an die das Magnetband 24 mit der Andruckrolle 43 angedrückt ist, die verstellbare Bandführung 41, eine ortsfeste Bandführung 58 und zwei weitere in der Kassette 2 enthaltene Bandführungen 59 und 60 bis zu der Spule 25. Sobald das Magnetband 24 den vorstehend beschriebenen Abtastverlauf einnimmt, kann in bekannter Weise ein Aufzeichnungs- oder Wiedergabevorgang von Fernsehsignalen und Tonsignalen erfolgen.

Das Gerät 1 weist weiters, wie dies in Fig.3 schematisch angedeutet ist, eine zwischen einer Ruheposition und einer Reinigungsposition verstellbare Kopfreinigungseinrichtung 61 auf. Die Kopfreinigungseinrichtung 61 ist mit einer in Fig.3 nicht dargestellten Federeinrichtung zu ihrer Ruheposition hin belastet und weist einen Betätigungsteil 62 auf, über den die Kopfreinigungseinrichtung 61 entgegen der Kraft der Federeinrichtung aus ihrer Ruheposition in ihre Reinigungsposition steuerbar ist. In Fig.3 ist die Kopfreinigungseinrichtung 61 in ihrer Ruheposition befindlich dargestellt. Durch Verstellen der Kopfreinigungseinrichtung 61 in Richtung des Pfeiles 63 ist dieselbe in ihre Reinigungsposition bringbar, in der sie zur Bewegungsbahn der Magnetköpfe der Abtasteinrichtung 53 hin verstellt ist und die an ihr vorbeibewegten Magnetköpfe reinigt.

Beim vorliegenden Gerät ist nunmehr vorteilhafterweise vorgesehen, daß der Betätigungsteil 62 der Kopfreinigungseinrichtung 61 in den Verstellweg der aus Kassettenaufnahmeeinrichtung 10 und gegebenenfalls darin eingesetzter Kassette 2 gebildeten Einheit ragend angeordnet und ausgebildet ist, wobei der Betätigungsteil 62 bei einer Verstellung der Kassettenaufnahmeeinrichtung 10 zwischen ihrer Ladeposition und ihrer Betriebsposition die Kopfreinigungseinrichtung 61 aus ihrer Ruheposition in ihre Reinigungsposition steuert. Im speziellen ist beim vorliegenden Gerät der Betätigungsteil 62 der Kopfreinigungseinrichtung 61 in den Verstellweg der Kassettenaufnahmeeinrichtung 10 ragend angeordnet und ausgebildet. Der Betätigungsteil 62 ragt nämlich in den Verstellweg der Deckenwand 12 der Kassettenaufnahmeeinrichtung 10, wie dies nachfolgend noch anhand der Fig.6 erläutert wird. Wie in Fig.3 angedeutet ist, weist das Gerät zum Halten bzw. Tragen aller vorstehend erwähnten Gerätekomponenten ein im wesentlichen plattenförmig ausgebildetes Chassis 64 auf.

Im folgenden wird anhand der Figuren 4 und 5 die Kopfreinigungseinrichtung 61 detailliert beschrieben. In den Figuren 4 und 5 ist die trommelförmige Abtasteinrichtung 53 dargestellt, die aus einem in Richtung des Pfeiles 65 rotierend antreibbaren oberen Trommelteil 66 und aus einem zu dem oberen Trommelteil 66 koaxialen stationären unteren Trommelteil 67 besteht. Der untere Trommelteil 67 weist einen Befestigungsring 68 auf, von dem drei Befestigungslappen 69, 70 und 71 in radialer Richtung abstehen. Über diese Befestigungslappen 69, 70 und 71 ist die trommelförmige Abtasteinrichtung 53 an drei in Fig.4 schematisch angedeuteten keilförmigen Lagerungsteilen 72, 73 und 74 mit Hilfe von Schrauben 75, 76 und 77 befestigt, wobei die Lagerungsteile 72, 73 und 74 auf nicht näher dargestellte Weise mit der Chassisplatte 64 verbunden sind. Mit dem rotierend antreibbaren Trommelteil 66 sind zwei in Fig.5 schematisch dargestellte Magnetköpfe 78 und 79 verbunden, die durch einen zwischen den beiden Trommelteilen 66 und 67 vorgesehenen Spalt 80 hindurch mit dem um einen Teilbereich der trommelförmigen Abtasteinrichtung 53 herumgeschlungenen und in Richtung eines Pfeiles 81 um den Teilbereich der trommelförmigen Abtasteinrichtung 53 laufenden Magnetband 24 in Abtastverbindung treten, wobei die Magnetköpfe 78 und 79 gegenüber der Längsrichtung des Magnetbandes 24 schräg verlaufende nebeneinanderliegende Spuren abtasten und dabei Signale auf dem Magnetband aufzeichnen bzw. Signale von dem Magnetband wiedergeben.

In den Figuren 4 und 5 ist weiters jene gerätestationäre Bandführung 55 detailliert dargestellt, die den von der trommelförmigen Abtasteinrichtung 53 ablaufenden Abschnitt des Magnetbandes 24 höhenmäßig führt. Diese Bandführung 55 besteht im wesentlichen aus einer Hülse, die auf einen in die Chassisplatte 64 eingepreßten Befestigungsstift 82, auf den eine Druckfeder 83 aufgesetzt ist und der an seinem freien Ende mit einem Gewinde versehen ist, aufgeschraubt ist. Die Bandführung 55 weist einen Flansch 84 auf, mit dem die obere Bandkante 85 des Magnetbandes 24 höhenmäßig geführt wird. Zur Höhenjustierung der Bandführung 55 ist dieselbe an ihrem freien Ende mit einem zur Aufnahme eines Justierwerkzeuges vorgesehenen Schlitz 86 versehen. Zur Höhenjustierung wird die Bandführung 55 verdreht und dabei über das Gewinde gegenüber dem Befestigungsstift 82 in axialer Richtung verstellt, wobei durch die Druckfeder 83 Spielfreiheit sichergestellt ist.

In den Figuren 4 und 5 ist weiters die Kopfreinigungseinrichtung 61 detailliert dargestellt. Zur Lagerung der Kopfreinigungseinrichtung 61 ist ein zweifach abgewinkelt ausgebildeter Bügel 87 aus Stahl vorgesehen, der im Bereich seines einen Endes 88 mittels der Schraube 75 unter Zwischenfügung eines Distanzstückes 89 und dem Befestigungslappen 69 an dem keilförmigen Lagerungsteil 72 festgeschraubt ist. Zur lagemäßigen Positionierung des Bügels 87 stützt sich der Bügel 87 mit seinem anderen Ende 90, das eine etwa kreisbogenförmig verlaufende Freistellung 91 aufweist, an dem Befestigungsstift 82 der Bandführung 55 ab. An dem an das Ende 88 angrenzenden Bereich des Bügels weist derselbe einen Einstich 92 auf, wodurch eine materialgeschwächte Zone 93 im Bügel 87 gebildet ist, die als Biegezone zur höhenmäßigen Lagejustierung des Bügels 87 bzw. der von dem Bügel 87 getragenen Teile ausgenützt wird.

In den Bügel 87 ist eine feststehende Achse 94 aus Stahl eingepreßt. Auf diese Achse ist ein Lagerteil 95 aus Kunststoff aufgesetzt, der um die Achse 94 in Richtung des Pfeiles 63 verschwenkbar ist. Der Lagerteil 95 besteht aus einer Lagerhülse 96, die mittels einer Sicherungsscheibe 97 an der Achse 94 fixiert ist. Von der Lagerhülse 96 steht ein mit der Lagerhülse 96 einstückig ausgebildeter Lagerarm 98 in radialer Richtung ab. Am freien Ende des Lagerarmes 98 ist eine mit dem Lagerarm 98 einstückig ausgebildete weitere feststehende Achse 99 vorgesehen. Auf die weitere Achse 99 ist ein topfförmiger Lagerkörper 100 aufgesetzt, der an seinem dem Lagerarm 98 zugewandten Ende einen Flansch 101 aufweist, der von einer vom Lagerarm 98 abstehenden Rastnase 102 übergriffen ist, wodurch der Lagerkörper 100 an der weiteren Achse 99 fixiert ist. Der Lagerkörper 100 ist gegenüber der weiteren Achse 99 verdrehbar und trägt an seinem Umfang einen hohlzylindrisch ausgebildeten Reinigungskörper 103, der aus Filz besteht, der aber auch aus einem filzartigen Kunststoff oder einem ähnlichen Material ausgebildet sein könnte.

Von der Lagerhülse 96 steht ferner ein dünner zweifach abgewinkelt ausgebildeter federnder Arm 104 ab, der mit der Lagerhülse 96 einstückig ausgebildet ist und sich mit seinem freien Ende 105 an dem Befestigungsring 68 der Abtasteinrichtung 53 abstützt. Der federnde Arm 104 bildet eine Federeinrichtung, die die Kopfreinigungseinrichtung 61 in Richtung zu ihrer Ruhelage hin belastet, wie dies insbesondere aus Fig.5 ersichtlich ist. Die Ruhelage der Kopfreinigungseinrichtung 61 ist beim vorliegenden Gerät dadurch festgelegt, daß sich ein zur weiteren Achse 99 koaxialer Anschlagstift 106, der mit dem Lagerarm 98 einstückig ausgebildet ist, an einer Anschlagfläche 107 am Bügel 87 abstützt.

Wie bereits erwähnt, weist die Kopfreinigungseinrichtung 61 einen Betätigungsteil 62 auf. Dieser Betätigungsteil 62 besteht aus einem mit der Lagerhülse 96 ebenfalls einstückig verbundenen und von der Lagerhülse 96 seitlich abstehenden Arm 108, an den sich ein im wesentlichen in Richtung der Achsen 94 und 99 verlaufender Arm 109 anschließt, der aufgrund seiner Kunststoffausbildung auch Federeigenschaften aufweist. Der Arm 109 ist, wie dies aus Fig.6 ersichtlich ist, zweifach abgewinkelt ausgebildet und das freie Ende 110 des Armes 109 ist in den Verstellweg der Deckenwand 12 der Kassettenaufnahmeeinrichtung 10 ragend ausgebildet und angeordnet, wie dies in Fig.6 schematisch dargestellt ist.

Auf diese Weise ist erreicht, daß bei jeder Verstellung der Kassettenaufnahmeeinrichtung 10 die Deckenwand 12, deren Bewegungsbahn in Fig.6 schematisch mit einer strichpunktierten Linie 111 angedeutet ist, mit dem freien Ende 110 des Armes 109 des Betätigungsteiles 62 in Wirkverbindung tritt, wodurch die gesamte Kopfreinigungseinrichtung 61 in Richtung des Pfeiles 63 verschwenkt wird. Dadurch wird der Reinigungskörper 103 zur Abtasteinrichtung 53 hin verschwenkt, wobei sich der Reinigungskörper 103 im Bereich des Spaltes 80 zwischen den beiden Trommelteilen 66 und 67 an die Abtasteinrichtung 53 anlegt. Hiedurch ist erreicht, daß die in dem Bereich des Spaltes 80 rotierenden Magnetköpfe 78 und 79, die in jedem Betriebsfall, in dem die Kassettenaufnahmeeinrichtung 10 verstellt wird, rotierend angetrieben werden, mit dem Reinigungskörper 103 im Bereich ihrer Arbeitsspalte in Kontakt treten, wobei der Reinigungskörper 103 die Bandlauffläche der Magnetköpfe 78 und 79 reinigt. Durch die Verstellung der Kassettenaufnahmeeinrichtung 10 wird die Kopfreinigungseinrichtung 61 zwar nur für einige Zehntelsekunden in ihre Reinigungsposition, in der der Reinigungskörper 103 an der Abtasteinrichtung 73 anliegt, verstellt. Diese Zeitspanne reicht aber aufgrund der in Relation hiezu hohen Rotationsgeschwindigkeit der Magnetköpfe 78 und 79 aus, daß jeder Magnetkopf einige Male mit dem Reinigungskörper 103 in Wirkverbindung tritt. Bei in ihrer Reinigungsposition befindlicher Reinigungseinrichtung 61 liegt der Reinigungskörper 103 an der Abtasteinrichtung 53 an, wobei über den rotierend angetriebenen Trommelteil 66 auch der Reinigungskörper 103 in Drehung versetzt wird, so daß vorteilhafterweise stets ein anderer Abschnitt des Reinigungskörpers 103 mit den Magnetköpfen 78 und 79 in Wirkverbindung kommt.

Im Rahmen der Erfindung sind auch andere Ausführungsmöglichkeiten realisierbar. Beispielsweise kann zur verstellbaren Halterung eines Reinigungskörpers anstelle eines verschwenkbaren Lagerteiles auch ein verschiebbarer Lagerschieber vorgesehen sein. Eine solche Ausbildung ist insbesondere dann von Vorteil, wenn die Kopfreinigungseinrichtung mit den Magnetköpfen einer trommelförmigen Abtasteinrichtung an der von einer eingesetzten Kassette abgewandten Seite mit dieser Abtasteinrichtung zusammenwirkt, wie dies der Fall ist bei einem Gerät, bei dem das Magnetband mit einer Bandfädeleinrichtung aus der Kassette gezogen wird, die zwei bezüglich einer senkrecht zur Stirnseite der Kassette verlaufenden, im wesentlichen durch die Achse der Abtasteinrichtung gehenden Symmetrieebene spiegelbildliche Bewegungsbahnen durchlaufende Fädel-Bandführungen aufweist.

## Patentansprüche

1. Gerät (1) zum Aufzeichnen und Wiedergeben von Signalen auf einem in einer Kassette (2) untergebrachten Magnetband (24) mit einer Abtasteinrichtung (53), die mindestens einen rotierend antreibbaren, auf einer kreisförmigen Bewegungsbahn umlaufenden Magnetkopf (78, 79) zum Abtasten des Magnetbandes (24) zum Aufzeichnen und Wiedergeben der Signale aufweist, und mit einer zum Zusammenwirken mit dem Magnetband (24) vorgesehenen, zwischen einer Ladeposition und einer Betriebsposition verstellbaren Kassettenaufnahmeeinrichtung (10), in die in ihrer Ladeposition das in der Kassette (2) untergebrachte Magnetband (24) in eine Ausgangsposition einbringbar ist und mit der durch ihre Verstellung in ihre Betriebsposition das Magnetband (24) in eine Zwischenposition bringbar ist, und mit einer zum Zusammenwirken mit dem Magnetband vorgesehenen, zwischen einer Ausfädelposition und einer Einfädelposition verstellbaren Bandfädeleinrichtung (47), mit der in ihrer Ausfädelposition das in seine Zwischenposition gebrachte Magnetband (24) hintergreifbar ist und mit der durch ihre Verstellung in ihre Einfädelposition das hintergriffene Magnetband (24) in einen Abtastverlauf bringbar ist, in dem das Magnetband (24) die Abtasteinrichtung (53) zumindest teilweise umschlingt und von dem Magnetkopf (78, 79) abtastbar ist, und mit einer zwischen einer Ruheposition und einer Reinigungsposition verstellbaren Kopfreinigungseinrichtung (61), die mit einer Federeinrichtung (104) zu ihrer Ruheposition hin belastet ist und die einen Betätigungsteil (62) aufweist, über den die Kopfreinigungseinrichtung (61) entgegen der Kraft der Federeinrichtung (104) aus ihrer Ruheposition in ihre Reinigungsposition steuerbar ist, in der sie zur Bewegungsbahn des Magnetkopfes (78, 79) hin verstellt ist und den an ihr vorbeibewegten Magnetkopf (78, 79) reinigt, dadurch gekennzeichnet, daß der Betätigungsteil (62) der Kopfreinigungseinrichtung (61) in den Verstellweg der aus Kassettenaufnahmeeinrichtung (10) und gegebenenfalls darin eingesetzter Kassette (2) gebildeten Einheit ragend angeordnet und ausgebildet ist, wobei der Betätigungsteil (62) bei einer Verstellung der Kassettenaufnahmeeinrichtung (10) zwischen ihrer Ladeposition und ihrer Betriebsposition die Kopfreinigungseinrichtung (61) aus ihrer Ruheposition in ihre Reinigungsposition steuert.

2. Gerät nach Anspruch 1, dadurch gekennzeichnet, daß der Betätigungsteil (62) der Kopfreinigungseinrichtung (61) in den Verstellweg der Kassettenaufnahmeeinrichtung (10) ragend angeordnet und ausgebildet ist.

## Claims

1. An apparatus (1) for recording and reproducing signals on a magnetic tape (24) accommodated in a cassette (2) by means of a scanning device (53) comprising at least one rotatable magnetic head (78, 79) moving along a circular path for scanning the magnetic tape (24) in order to record and reproduce the signals, the apparatus comprising a cassette holder (10), which is movable between a loading position and an operating position for cooperation with the magnetic tape (24), into which holder in the loading position thereof the magnetic tape (24) in the cassette (2) can be inserted in an initial position and by means of which holder by its movement into the operating position the magnetic tape (24) can be brought into an intermediate position, and a tape-threading device (47), which is adapted to cooperate with the magnetic tape and is movable between a thread-out position and a thread-in position, which tape-threading device in its thread-out position is engageable behind the magnetic tape (24) which has been brought into its intermediate position and by means of which upon engagement as a result of the movement of said threading device to the thread-in position the magnetic tape (24) can be arranged along a scanning path in which the magnetic tape (24) is wrapped at least partly around the scanning device (53) and can be scanned by the magnetic head, and a head-cleaning device (61) which is movable between a rest position and a cleaning position, which cleaning device is urged to its rest position by a spring means (104) and comprises an actuating member (62) by means of which the head-cleaning device (61) is movable from its rest position into its cleaning position against the force of the spring means (104), in which cleaning position it has been moved towards the path of the magnetic head (78, 79) and cleans the magnetic head (78, 79) moving past it, characterised in that the actuating member (62) of the head-cleaning device (61) is arranged and constructed to project into the path of movement of the unit formed by the cassette holder (10) and a cassette (2) when inserted therein, the actuating member (62) causing the head-cleaning device (61) to be moved from its rest position to its cleaning position when the cassette holder (10) is moved between its loading position and its operating position.

2. An apparatus as claimed in Claim 1, characterised in that the actuating member (62) of the head-cleaning device (61) is arranged and constructed to project into the path of movement of the cassette holder (10).

## Revendications

1. Appareil (1) pour enregistrer et reproduire des signaux sur une bande magnétique (24) logée dans une cassette (2), comprenant un dispositif d'analyse (53), qui comporte au moins une tête magnétique (78, 79), qui peut être entraînée en rotation et qui tourne sur une trajectoire de déplacement circulaire, pour analyser la bande magnétique (24) afin d'enregistrer et de reproduire les signaux, et un dispositif de logement de cassette (10) prévu pour coopérer avec la bande magnétique (24) et déplaçable entre une position de chargement et une position de fonctionnement, dans lequel, dans sa position de chargement, la bande magnétique (24) logée dans la cassette (2) peut être amenée dans une position de départ et à l'aide duquel, par un déplacement dans sa position de fonctionnement, la bande magnétique (24) peut être amenée dans une position intermédiaire, et un dispositif de transfert de bande (47) prévu pour coopérer avec la bande magnétique (24) et déplaçable entre une position de départ de transfert et une position de fin de transfert à l'aide duquel, dans sa position de départ de transfert, la bande magnétique (24) amenée dans sa position intermédiaire peut être attaquée par l'arrière et à l'aide duquel, par son déplacement dans sa position de fin de transfert, la bande magnétique (24) attaquée par l'arrière peut être amenée dans une trajectoire d'analyse, dans laquelle la bande magnétique (24) entoure au moins en partie le dispositif d'analyse (53) et peut être explorée par la tête magnétique (78, 79), et un dispositif de nettoyage des têtes (61) déplaçable entre une position de repos et une position de nettoyage, qui est sollicité par un dispositif à ressort (104) vers sa position de repos et qui présente un organe d'actionnement (62), par l'intermédiaire duquel le dispositif de nettoyage des têtes (61) peut être commandé à l'encontre de la sollicitation du dispositif à ressort (104) de sa position de repos dans sa position de nettoyage, dans laquelle il est déplacé vers la trajectoire de déplacement de la tête magnétique (78, 79) et nettoie la tête magnétique (78, 79) qui passe devant lui, caractérisé en ce que l'organe d'actionnement (62) du dispositif de nettoyage des têtes (61) est disposé et conçu de manière à s'étendre dans le chemin de déplacement de l'unité formée du dispositif de logement de cassette (10) et le cas échéant, de la cassette (2) introduite dans ce dispositif, étant entendu que l'organe d'actionnement (62), dans le cas d'un déplacement du dispositif de logement de cassette (10) entre sa position de chargement et sa position de fonctionnement commande le dispositif de nettoyage des têtes (61) de sa position de repos dans sa position de nettoyage.

2. Appareil suivant la revendication 1, caractérisé en ce que l'organe d'actionnement (62) du dispositif de nettoyage des têtes (61) est disposé et conçu de manière à s'étendre dans le chemin de déplacement du dispositif de logement de cassette (10).
